Europäisches Patentamt

European Patent Office

Office européen des brevets

(11) Publication number: **0 203 210**
**B1**

# EUROPEAN PATENT SPECIFICATION

(45) Date of publication of patent specification: **23.08.89**

(21) Application number: **85106488.1**

(22) Date of filing: **25.05.85**

(51) Int. Cl.⁴: **B 29 C 67/14,** B 29 C 53/80,
B 29 C 53/82 // F16C3/02 ,
B29L23:00

(54) **Cone control method and tool for fabricating composite shafts.**

(43) Date of publication of application:
**03.12.86 Bulletin 86/49**

(45) Publication of the grant of the patent:
**23.08.89 Bulletin 89/34**

(84) Designated Contracting States:
**DE FR GB IT**

(56) References cited:
**EP-A-0 087 543**
**DE-B-1 169 646**
**FR-A-2 080 428**
**FR-A-2 152 289**
**FR-A-2 531 158**
**US-A-3 896 206**
**US-A-3 970 495**
**US-A-4 236 386**

(73) Proprietor: **THE BOEING COMPANY**
**7725 East Marginal Way**
**Seattle Washington 98108 (US)**

(72) Inventor: **Rumberger, William E.**
**3523 Horton Road**
**Newton Square Pennsylvania, 19073 (US)**

(74) Representative: **Dreiss, Hosenthien &**
**Fuhlendorf**
**Gerokstrasse 6**
**D-7000 Stuttgart 1 (DE)**

· Courier Press, Leamington Spa, England.

## Description

### BACKGROUND OF THE INVENTION
#### 1. Field of the invention

The present invention relates to a tool used in conjuction with composite material dispensing means for forming a composite shaft having a cylindrical portion and at least one flared end and to a method of forming a composite shaft defining a longitudinal axis and having a cylindrical portion and at least one flared end, each defining an inner and an outer surface.

The composite shafts are fabricated from continuous filaments in either a roving or tape form within a resin matrix and subsequently cured to form a rigid monolithic structure. The composite shafts fabricated may be used in a static structural application or in a dynamic environment where they may be required to transmit torque and power.

#### 2. Prior Art

Composite shafts and apparatus for fabricating them are known. See, for example, U.S. Patent 3,733,233. In this patent, filament winding is disclosed as the preferred mode of fabrication. Instead of the filament winding, however, a tape winding could be used. To couple the shafts fabricated in accordance with the teaching of the noted patent, the shaft ends must be modified or a coupling provided. An example of such an end modification can be seen in U.S. Patent 4,362,521. In this patent a metal end fitting is provided which is pushed into the shaft end and is engaged by a pair of bolts for torque transmission. The shaft end which accommodates the metal end fitting is provided with a cemented-in sleeve and a cemented-on tubular portion so that the wall thickness of the shaft is not uniform along its length. According to another known end modification technique, an end fitting is wound into the shaft end and as such is locked-in and cannot be removed. Since such designs generally require a thicker wall in the coupler/fastener area there is an associated penalty of cost and weight because extra material is required. Also, pin or bolt holes in a composite structure are undesirable because they cut the load carrying filaments and introduce an interlaminar shear condition, i.e., one requiring the resin to transfer load to the next fiber. These coupler/fastener designs are undesirable from a structural standpoint. They are also undesirable bacause they compromise the simplicity of mandrel winding due to the need to alter the winding schedule in order to properly secure the coupler/fastener, or build-up material in the coupler portion of the shaft.

A method of forming a composite shaft is known from US-Patent 3,970,495 according to which a mandrel having end plates and onto which composite material is dispensed is completely placed into a die having a center mold and end molds for forming two flared ends of the composite shaft. There upon the mandrel is expanded into contour conforming contact with the interior die faces of the three molds by the application of fluid pressure. For this method, the used die as well as its handling is relatively complicated. Further, the provision of fluid pressure within all molds of the die is just for conforming the contour of the composite shaft to be formed to the contour of the whole die.

A method of forming a composite shaft in the form of a fiber reinforced plastic shaft is also known from US-Patent 3,896,206 in which, however, the shaft is formed on a tapered mandrel in a two part steel mold. The inner surface of this hollow tapered shaft is then radially compressed by longitudinal movement of the mandrel.

It would be desirable, therefore, to fabricate a composite shaft which has a generally uniform wall thickness along its length, which does not require a permanently secured coupler/fastener, which does not require that its ends have holes formed therein, and which does not compromise the simplicity of, for example, a filament winding technique. Also it would be desirable to fabricate a composite shaft which does not require any substantial amount of machining and eliminates inner and outer machining at its ends.

### OBJECT AND SUMMARY OF THE INVENTION

The object of the present invention is to provide the existing state-of-the-art with a method and tool as previously stated wherein the shaft after curing and parting off the mandrel is in a condition of completeness such that the shaft can be assembled without the necessity of any further substantial machining.

According to the invention (claim 1) the tool used in conjuction with composite material dispensing means for forming a composite shaft having a cylindrical portion and at least one flared end, comprises a mandrel defining a longitudinal axis and the cylindrical portion of the composite shaft an inner cone ring connected to at least one end of the mandrel; an outer cone ring at each end of the mandrel at which an inner cone ring is connected, both cone rings defining composite material engaging surfaces which extend at substantially the same angle with respect to said longitudinal axis; and force generating means operatively associated with each outer cone ring for displacing said outer cone ring relative to its associated inner cone ring and thereby conforming/compacting the composite material between the composite material engaging surfaces of both cone rings.

According to the present invention both the method and tool produce a shaft with at least one flared end the inner and outer external circumferential surfaces of which are of machine like quality. This quality is achieved without machining and the associated cutting of fibers which is detrimental to the structural integrity of the shaft produced.

The tool includes, in its essential parts, a mandrel and a specially adapted end fitting or end fittings, depending on whether one or both ends of the shaft are to be flared the end fittings define the angle and direction of flaring. They also give the tool its conforming/compacting capability.

An elastomeric coating is contemplated in conjunction with the end fittings. The elastomeric coating when applied, is applied to at least one of the inner and outer surfaces of each flared end of the shaft. The elastomeric coating provides a fretting/resistant/resilient property to the coupler interface such that the coupler loads are transmitted through the elastomeric.

According to the invention the method of forming a composite shaft defining a longitudinal axis and having a cylindrical portion and at least one flared end, each defining an inner and an outer surface, comprises either (claim 11) the steps of, dispensing composite material onto a tool comprising a mandrel, an inner cone connected to at least one end of the mandrel and an outer cone ring located at each end of the mandrel at which an inner cone ring is connected, to form the cylindrical portion and the at least one flared end of the composite shaft; and applying a force, by movement of the outer cone ring relative to its associated inner cone ring of the tool in the direction of the longitudinal axis, over the inner and outer surfaces of the at least one flared end for conforming/compacting the composite material at the at least one flared end, thereby producing a smooth inner and outer surface at the at least one flared end; or (claim 14) the steps of dispensing composite material onto a tool comprising a mandrel, an inner cone ring connected at least one end of the mandrel and an outer cone ring located at each end of the mandrel at which an inner cone ring is connected, to form the cylindrical portion and the at least one flared end of the composite shaft; and applying a force over the inner and outer surfaces of at least one flared end at intermediate stages during the dispensing step for conforming/compacting the composite material at the at least one flared end, thereby producing a smooth inner and outer surface at the at least one flared end.

The method utilizes the conforming/compacting capability to produce a machine-like surface at the inner and outer surfaces of each flared end of the shaft. According to the method, conforming/compacting can proceed intermediately, i.e., at selected intervals in the winding schedule, or after winding is completed. The intermediate option produces a more optimized result. In conjunction with conforming/compacting, the method contemplates producing an optimized fiber placement and a controlled resin density in the flared ends of the shaft.

BRIEF DESCRIPTION OF THE DRAWINGS

Seven figures have been selected to illustrate the preferred embodiment and best mode of the present invention. These figures, while schematic in some respects, are sufficiently detailed to inform those skilled in the art. Included are:

Figure 1, which is a schematic partial longitudinal cross-sectional view in elevation of the tool apparatus for practicing the method of the present invention according to which a composite shaft is fabricated with at least one end having a flared orientation with surfaces of machine-like quality;

Figure 2, which is a schematic view illustrating a winding apparatus;

Figure 3, which is an end view of the composite shaft illustrating the use of the flat surfaces as a keying method for internal cone fittings;

Figure 4, which is a schematic partial cross-sectional view in elevation of a helicopter rotor shaft fabricated in accordance with the present invention;

Figure 5, which is a view taken along 5-5 of Figure 4;

Figure 6, which is a schematic partial cross-sectional view in elevation of a shaft end coupling in accordance with the present invention; and

Figure 7, which is a view taken along line 7-7 of Figure 6.

DETAILED DESCRIPTION OF A PREFERRED EMBODIMENT

At least one end of the composite shaft fabricated in accordance with the method and the tool of the present invention is provided with a flared end having substantially parallel inner and outer surfaces which serve as bearing surfaces which are engaged by corresponding surfaces of a coupling. The conformity of the bearing surfaces is of importance. Any surface which is manufactured by, for example, the winding of fibers on a mandrel produces irregularities, which appear as peaks and valleys. A given total bearing load will necessarily be supported upon the peaks thereby greatly increasing the local unit pressure developed. It is essential, therefore, to produce a smooth and regular bearing surface in order to properly distribute the bearing loads.

Although an acceptable outer bearing surface can be achieved through a procedure of winding layers of sacrificial fibers and resin which after curing would be machined to the desired surface shape and finish, such a procedure imposes the penalties of added weight and cost, as well as manufacturing time and risk because of the potential for human error.

To achieve the desired machine-like surface, i.e., a surface which is smooth and conformable to a desired shape at the flared ends of the composite shaft, it is proposed according to the present invention to employ a means for molding fiber adjustment, hereafter referred to as conforming/compacting. For this purpose a pair of cone rings are provided at each flared end of the shaft which act as molds imparting their surface condition to the inner and outer end surfaces of the shaft with which it is engaged. The cone rings can be applied at the end of the winding of the composite shaft, or in addition, at intermediate stages of the winding. In either case, care must be exercised to insure that the compacting force applied to the cone rings is not excessive or deficient. If the force is excessive, a resin starved structure can result, and if the force is deficient, an irregular and resin rich surface structure can result. Neither condition is desirable. The cone control process of the present invention is ideally suited to provide the proper degree of force application, either, or preferably, in conjunction with the known debulking procedures.

According to one such procedure bleed cloth and shrink tape are applied to the winding at various stages to soak-up excess resin and apply a compacting force to the winding. The periodic application of the bleed cloth and shrink tape can be followed by the placement of the cone rings at a flared end, followed by the application of a force to the outer cone ring, which force is directed substantially axially of the shaft longitudinal axis, causing the outer cone ring to be biased toward the inner cone ring and thereby compact the winding between them.

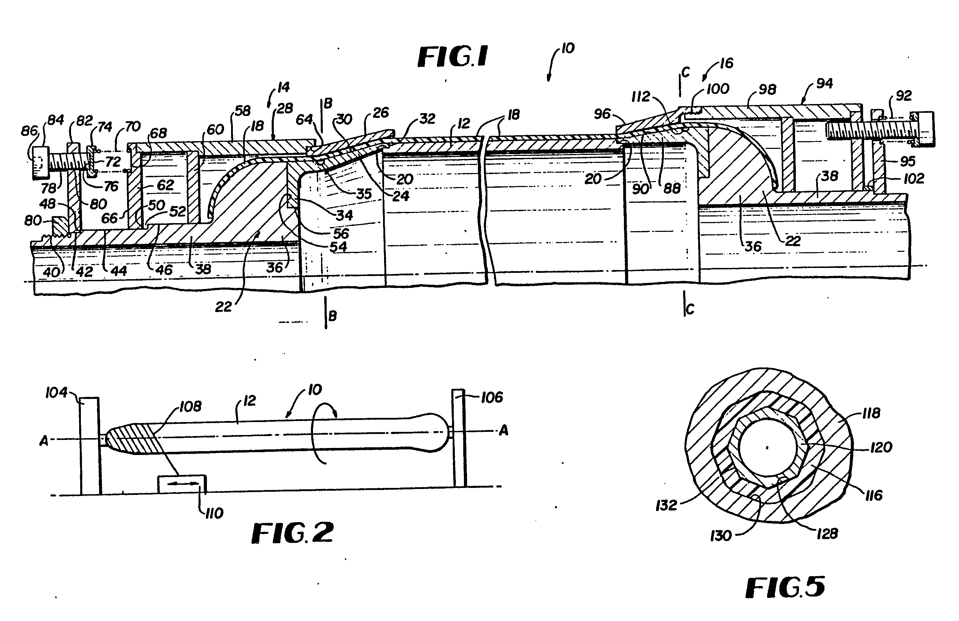

Turning now to Fig. 1 a tool 10 is shown which includes a tubular mandrel 12 and mandrel end fitting assemblies 14 and 16. The tool 10 is mounted in a machine (Fig. 2) for filament winding or tape winding onto the mandrel 12. Any of a number of known machines for this purpose can be used.

A composite shaft 18 is formed by the noted winding process. As such the fiber direction is substantially helical with respect to axis A-A. This fiber orientation is preferred for drive shaft applications. If a uni-directional orientation is desired either-very small helical angles are used or a lay-up procedure is used. Such a lay-up procedure is known.

The mandrel 12 is provided at each end with a pilot diameter 20 each defining a similar pilot diameter in the mating part. The outer surface of the mandrel 12 can have a slight taper in its extension between the pilot diameters 20 which facilitates removal of the mandrel after fabrication of the shaft 18.

In the embodiment shown in Fig. 1, the mandrel end fitting assembly 14 includes a turn-around end fitting 22, an inner cone ring 24 (the previously noted mating part) an outer cone ring 26 and a conforming/compacting force generator 28. The inner cone ring 24 has an outwardly flared wall which defines a cone surface 30 and a cylindrical end surface 32. The cylindrical end surface 32 is received in and engages the pilot diameter 20 at one end of the mandrel 12. At its other end the inner cone ring 24 is provided with a pilot seat flange 34. Between its two ends and adjacent to that portion which defines the cone surface 30 the inner cone ring 24 may be provided with a relief groove 35 which is filled-in with, for example, resin prior to winding. The outer ring 26 is designed to be compatible with the inner ring 24 so that it flares outwardly as does the inner cone ring 24.

The turn-around end fitting 22 includes a curved dome 36. The dome 36 is connected with or formed integral with a spindle 38. At its other end the spindle 38 is provided with threads 40. Between the threads 40 and the curved dome 36 the spindle 38 is provided with three centering lands 42, 44, and 46. These lands define two stop surfaces 48 and 50. A shim 52 provides an adjustable stop feature. At the front end of the curved dome 36 a compound groove 54 is formed in which a pilot seat diameter 56 is defined which is engaged by the pilot seat flange 34.

The conforming/compacting force generator 28 includes a force transmitting cylinder 58 and a pair of bulkhead centering rings 60 and 62. The inner bulkhead ring 60 pilots on land 46, while the outer bulkhead ring 62 pilots on land 44 and engages the adjustment shim 52. At its front surface the force transmitting cylinder 58 is provided with a pilot diameter 64 on which one end of the outer reaction ring 26 is received. The outwardly facing outer surface 66 of the outer bulkhead centering ring 62 has at least one but preferably two or more, diametrically opposed, circular recesses 68 formed thereon. These recesses receive one end of a spring 70. The other end of the spring 70 fits within a spring seat 72 of a ring 74. The ring 74 has a bolt receiving seat 76 on its opposed surface within which the front end of the threaded bolt 78 is received. The threaded bolt 78 passes through a threaded hole 80 in an annular bulkhead ring 82. The exposed end of the threaded bolt 78 has a head 84 within which a torque wrench socket 86 is provided.

The mandrel end fitting assembly 16 is slightly modified in comparison with the mandrel end fitting assembly 14 to account for the fact that an outward rather than an inward flared end is desired. An inner cone ring 88 defines a cone surface 90. The surface 90 extends upwardly from the mandrel 12 rather than upwardly to the mandrel 12 as does the surface 30. The spring 92 of the conforming/compacting force generator 94 is located on the outside of the annular bulkhead ring 95 so that the outer cone ring 96 is pulled rather than pushed as is the outer cone ring 26. For this purpose, the outer cone ring 96 and the force transmitting cylinder 98 are threadedly engaged at 100. A limiting shim stop 102 functions to limit travel of the outer cone ring 96.

According to the method aspect of the present invention, filaments or tape are dispensed onto the mandrel 12, inner cone rings 24 and 88 and the domes 36. An apparatus for winding the filaments is schematically illustrated in Fig. 2. The tool 10 is shown with the mandrel 12 mounted for rotation between end supports 104 and 106. The mandrel 12 is shown to include an inwardly flared end and an outwardly flared end as in Fig. 1. Filaments or tape 108 are wound on mandrel 12 by a shuttle-type device 110 as the mandrel 12 rotates about its axis A-A, while the conforming/compacting force generators 28 and 94 are deployed after a filament winding sequence.

As noted, the filaments or tape are wound onto the mandrel 12, the inner cone rings 24 and 86 and the domes 36. The domes 36 provide a turn-around which permits the maintenance of fiber tension during successive passes of the winding apparatus. The domes 36 also maintain fiber tension during the conforming/compacting step.

As previously noted, according to one preferred feature of the present invention, conforming/compacting with the cone rings occurs after the build-up is completed. Alternatively, conforming/compacting can proceed at intermediate stages during winding. In either case, conforming/compacting is accomplished by adjusting the spring force of the springs 70 and 92, which adjusted force is applied to the outer cone rings 26 and 96 by the force transmitting cylinders 58 and 98, respectively. In the case of the cone ring 26, the force is a pushing force, while for the cone ring 96, the force is a pulling force. In either case, the cone rings are urged by the adjusted force toward their respective inner cone rings, and consequently the composite material between the composite material engaging surfaces of the representative pairs of cone rings is conformed/compacted.

The cone rings serve as molds in the process of conforming/compacting. The conforming/compacting has the beneficial effect of producing a concentric machine-like surface at the outer flared end surfaces of the composite build-up, i.e., the conformity and finish of these surfaces is as if they were machined. Also, conforming/compacting aids in producing an optimized resin distribution in the build-up, along with or without the debulking procedure so that neither a resin starved nor resin rich structure will result. It has been found that the intermediate application of conforming/compacting achieves optimization more readily than a single conforming/compacting at the completion of the winding.

The only machining that is necessary is the parting of the composite shaft on the mandrel after curing at planes B-B and C-C. For this purpose the outer cone rings 26 and 96 are removed along with the mandrel end fitting assemblies 14 and 16. To facilitate the cutting of the composite shaft 18 at the planes B-B and C-C, the relief groove 35 and a corresponding relief groove 112 can be provided. These relief grooves are preferably filled with a cured resin material prior to winding. As a result, cutting of the inner cone is prevented and the composite shaft is cleanly cut.

The use of pilot diameters (diameters 20, lands 42, 44 and 46, which define stops 48 and 50, and diameter 56) are employed in order to control the concentricity of the composite shaft fabricated. Also, the outer cone rings can be centered as are the inner cone rings for concentricity control. The pilot diameter 64 (Fig. 1) serves to center the outer cone ring 26 as well as to transmit force from the force transmitting cylinder 58 to the outer cone 26.

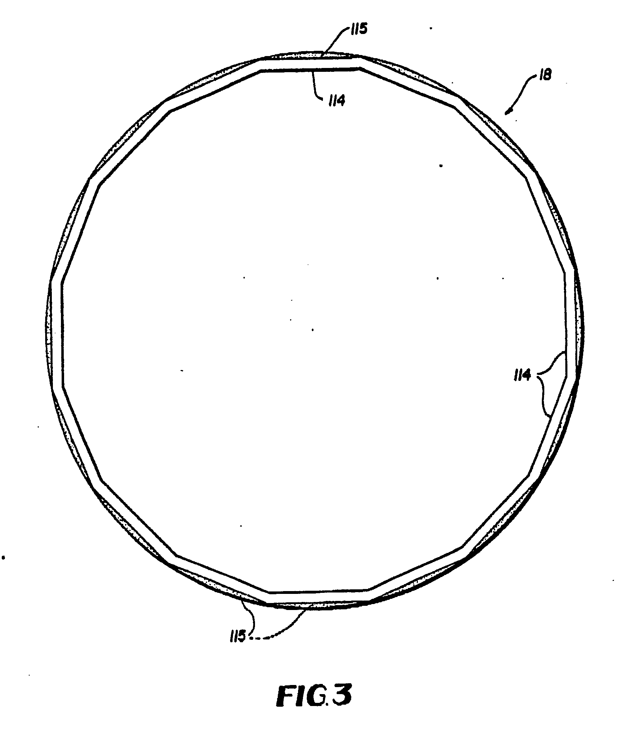

After the step of conforming/compacting, the tool remains in place with load applied during curing. Curing is accomplished in a known manner. Curing structuralizes the build-up, i.e., it renders it rigid and capable of carrying a load independently. In before or after partial or final curing, it is determined that the flared ends of the outer surfaces require additional material to produce the desired conical configurations, those areas 115 (Fig. 3) can he filled with resin and fibers to achieve the desired configuration. Also, before curing, after partial curing or after total curing of the build-up the inner and outer flared surfaces many be coated with an elastomeric and fretting resistant coating 150, 152 (Fig. 6) such as a urethane coating to impart a shock resistant/resilient property to the coupler interface such that the coupler loads are transmitted through the elastomer.

As also shown in Fig. 3, the flared ends of the shaft can be fabricated to include at least one flat surface 114 and preferably a series of these flat surfaces. These flat surfaces are desired when the composite shaft is to be used to transmit torque, although other known keying structures may be used when transmitting torque loads.

To produce these flat surfaces in the flared ends of the shaft, the cone rings are provided with corresponding flat surfaces. In this way it is possible to provide either or both the inner and outer surfaces of the flared ends of the shaft with flat surfaces. The flat surfaces on the inner surface of the flared end of a shaft develop during the winding process, while the flat surfaces on the outer surface of the flared end of a shaft develop during the conforming/compacting process. The conforming/compacting process also has the effect of enhancing the flat surfaces on the inner surface of the flared end of the shaft because the conforming/compacting force is transmitted through the composite material to the inner cone ring.

The cone rings 24, 26, 88, and 96 form part of the tool 10. They can also, however, serve as coupling elements.

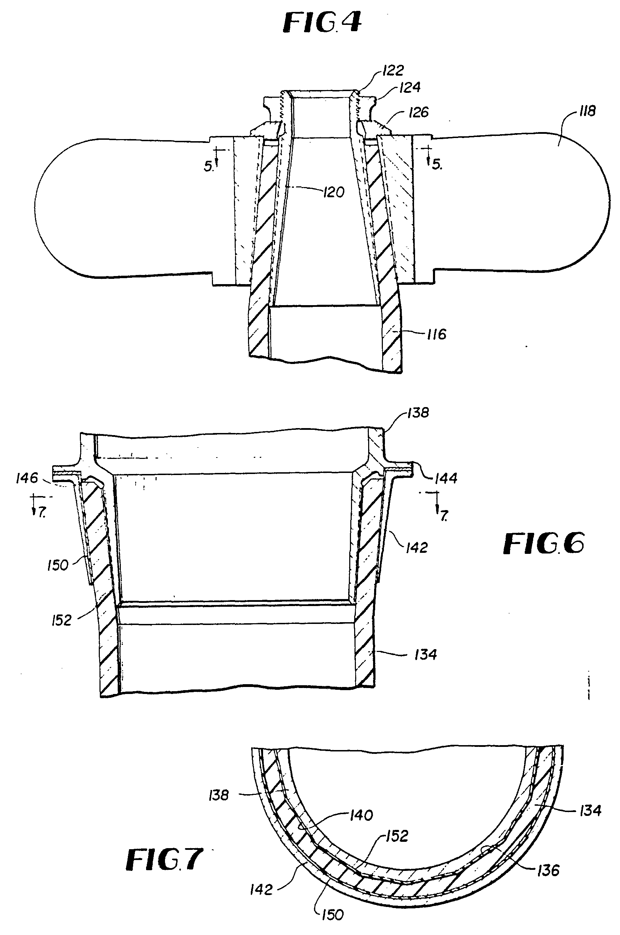

Two applications of the invention are shown in Figures 4-7. The applications shown in Figures 4 and 5 is to a helicopter rotor head. In Figures 4 and 5 a composite shaft 116 with an inwardly flared portion is shown to which a rotor hub 118 is connected. The shaft 116 serves as the drive shaft for driving the rotor hub 118. A threaded adapter 120 is mounted within the flared portion of the shaft 116 and extends outwardly therefrom. The outwardly extending portion includes a threaded region 122 which receives a retaining nut 124 on threaded engagement. The retaining nut 124 bears against a retaining plate 126 which secures and preloads the rotor hub 118 to the shaft 116. The shaft 116 is fabricated according to the method noted above to include flat surfaces 128 and 130 on both the inner and outer surfaces, respectively of the inwardly flared portion of the shaft 116, as shown in Fig. 5. Flat surfaces 132 are formed on the outer surface of the threaded adapter 120 which are compatible and engage with the flat surfaces 128. In this particular application of the invention, the flat surfaces 128, 130, and 132 are tapered as shown in Figure 4, i.e., they are more pronounced at one end. At the end shown in Figure 5, the flat surfaces are most pronounced, while at the opposite end of the inwardly flared portion a cross section thereof would reveal a circular outer circumference without flat surfaces.

The threaded adapter 120 can be fabricated as is the shaft 120 according to the principles of the present invention.

In Figures 6 and 7 a composite shaft 134 with an outwardly flared portion is shown. The inner surface of the outwardly flared portion defines a circumference with tapered flat surfaces 136, while the outer surface defines a circular circumference. In this application the shaft 134 is intended to be driven only and is not intended to also drive, as in the application shown in Figures 4 and 5 where the shaft 116 also drives the rotor hub 118. The shaft 134 is driven by a shaft 138 which includes an inwardly tapered portion, so tapered to be compatible with the outwardly tapered portion of the shaft 134. The shaft 138 includes tapered flat surfaces 140 with are compatible and engage with the flat surfaces 136.

The application shown in Figs. 6 and 7 has an inner driving member 138 with centering pilot 146 and flange 144. Outer cone ring 142 is secured to inner member 138, by, for example, a bolt pattern, and provides a means of compressing/preloading drive shaft 134. The compressing/preloading and keying features of the inner member 138 and outer cone ring 142 significantly enhance the load carrying ability of the coupling where such loads can be torsional, axial and bending. As such, the bolted flange arrangement provides the same function as does the ring of Figure 4.

## Claims

1. A tool (10) used in conjuction with composite material dispensing means (110) for forming a composite shaft (18,116,134) having a cylindrical portion and at least one flared end, comprising:
   a mandrel (12) defining a longitudinal axis and the cylindrical portion of the composite shaft (18,116,134);
   an inner cone ring (24,88) connected to at least one end of the mandrel (12);
   an outer cone ring (26,96) located at each end of the mandrel (12) at which an inner cone (24,88) ring is connected, both cone rings (24,88;26,96) defining composite material engaging surfaces (30,90) which extend at substantially the same angle with respect to said longitudinal axis; and
   force generating means (28,94) connected to and operatively associated with each outer cone ring (26,96) for desplacing said outer cone ring (26,96) relative to its associated inner cone ring (24,88) and thereby conforming/compacting the composite material between the composite material engaging surfaces (30,90) of both cone rings (24,88;26,96).

2. The tool as defined in claim 1, wherein:
   i) an inner cone ring (24,88) and an outer cone ring (26,96) are located at each end of the mandrel (12); and
   ii) said mandrel (12) defines a pilot diameter (20) at each end for receiving a portion (32) of its associated inner cone ring (24,88), so that each inner cone ring (24,88), is similarly located relative to said longitudinal axis.

3. The tool as defined in claim 2, further wherein:
   iii) said mandrel (12) includes an outer surface which defines a taper between the pilot diameters (20).

4. The tool as defined in claim 1, wherein:
   i) the composite material engaging surface (30,90) of at least one of each pair of inner and outer cone rings (24,88;26,96) includes at least one circumferentially extending flat portion which forms a corresponding flat portion (114,136) in the engaged surface of the composite shaft (18,116,134) fabricated.

5. The tool as defined in claim 1, wherein:
   i) the composite material engaging surface (30,90) of each pair of inner and outer cone rings (24,88;26,96) includes at least one circumferentially extending flat portion which forms a corresponding flat portion (114,136) in the engaged surface of the composite shaft (18,116,134) fabricated.

6. The tool as defined in claim 1, further comprising:
   turn-around end fitting means (22) located at each mandrel end for supporting the force generating means (28,94) and part of the inner cone ring (24,88) located at each mandrel end.

7. The tool as defined in claim 6, wherein:
   i) said turn-around end fitting means (22) includes a spindle (38) which defines at least one stop means (48,50,52;102) for limiting travel of said force generating means (28,94) relative to said longitudinal axis.

8. The tool as defined in claim 6, wherein:
   i) said turn-around end fitting means (22) includes a spindle (38) and a dome portion (36), said spindle (38) including stop means (48,50,52;102) for limiting travel of said force generating means (28,94) relative to said longitudinal axis; and
   ii) said dome portion (36) includes stop means (54) for limiting travel of the inner cone ring (24,88) relative to said longitudinal axis.

9. The tool as defined in claim 8, wherein:
   iii) said mandrel (12) includes an outer surface onto which composite material is dispensed; and
   iv) said dome portion (36) includes a curved surface which serves as an extension of the outer surface of said mandrel (12).

10. The tool as defined in claim 1, wherein:
   ii) said force generating means (28,94) includes at least two diametrically opposed adjustable spring assemblies (70,92).

11. A method of forming a composite shaft (18,116,134) defining a longitudinal axis and having a cylindrical portion and at least one flared end, each defining an inner and an outer surface, comprising the steps of:
   dispensing composite material onto a tool (10) comprising a mandrel (12), an inner cone ring (24,88) connected to at least one end of the mandrel (12) and an outer cone ring (26,96) located at each end of the mandrel (12) at which an inner cone ring (24,88) is connected, to form the cylindrical portion and the at least one flared end of the composite shaft; and

applying a force, by movement of the outer cone ring (26,96) relative to its associated inner cone ring (24,88) of the tool (10) in the direction of the longitudinal axis, over the inner and outer surfaces of the at least one flared end for conforming/compacting the composite material at the at least one flared end, thereby producing a smooth inner and outer surface at the at least one flared end.

12. The method as defined in claim 11, wherein:
i) the force is applied to the at least one flared end at the completion of the dispensing step.

13. The method as defined in claim 11, wherein:
i) the force is applied to the at least one flared end at intermediate stages during the dispensing step.

14. A method of forming a composite shaft (18,116,134) defining a longitudinal axis and having a cylindrical portion and at least one flared end, each defining an inner and an outer surface, comprising the steps of:

dispensing composite material onto a tool (10) comprising a mandrel (12), an inner cone ring (24,88) connected at at least one end of the mandrel (12) and an outer cone ring (26,96) located at each end of the mandrel (12) at which an inner cone ring (24,28) is connected, to form the cylindrical portion and the at least one flared end of the composite shaft; and

applying a force over the inner and outer surfaces of the at least one flared end at intermediate stages during the dispensing step for conforming/compacting the composite material at the at least one flared end, thereby producing a smooth inner and outer surface at the at least one flared end.

**Patentansprüche**

1. In Verbindung mit einer Verbundmaterial abgebenden Vorrichtung (119) verwendetes Werkzeug (10) zum Formen einer Verbundwelle (18,116,134), welche einen zylindrischen Bereich und wenigstens einen konisch erweiterten Endbereich besitzt mit:

einem Dorn (12), der eine Längsachse und den zylindrischen Bereich der Verbundwelle (18,116,134) bestimmt;

einem inneren Kegelring (24,88), der mit wenigstens einem Ende des Dorns (12) verbunden ist;

einem äußeren Kegelring (26,96), der an jedem Ende des Dorns (12) angeordnet ist, mit dem ein innerer Kegelring (24,88) verbunden ist, wobei beide Kegelringe (24,88;26,96) mit den Verbundmaterial in Eingriff bringbare Flächen (30,90) bestimmen, die im wesentlichen unter gleichem Winkel zur Längsachse verlaufen; und

Krafterzeugungsmitteln (28,94), die mit jedem äußeren Kegelring (26,96) verbunden und jedem äußeren Kegelring (26,96) zu dessen Verschieben relativ zu seinem ihm zugeordneten inneren Kegelring (24,88) zugeordnet sind, um dadurch das Verbundmaterial zwischen den mit dem Verbundmaterial in Eingriff befindlichen Flächen (30,90) der beiden Kegelringe (24,88;26,96) maßhaltig zu formen/zu verdichten.

2. Werkzeug nach Anspruch 1, dadurch gekennzeichnet,
i) daß ein innerer Kegelring (24,88) und ein äußerer Kegelring (26,96) an jedem Ende des Dorns (12) angeordnet sind; und
ii) daß der Dorn (12) an jedem Ende einen Führungsdurchmesser (20) zur Aufnahme eines Bereiches (32) seines ihm zugeordneten inneren Kegelringes (24,88) aufweist, so daß jeder innere Kegelring (24,88) in gleichartiger Weise relativ zur Längsachse angeordnet ist.

3. Werkzeug nach Anspruch 2, dadurch gekennzeichnet,
iii) daß der Dorn (12) eine äußere Fläche enthält, die zwischen den Führungsdurchmessern (20) einen kegeligen Verlauf festlegt.

4. Werkzeug nach Anspruch 1, dadurch gekennzeichnet, daß
i) die mit dem Verbundmaterial in Eingriff bringbare Fläche (30,90) wenigstens eines jedes Paares aus innerem und äußerem Kegelring (24,88;26,96) wenigstens einen sich umfangsseitig erstreckenden ebenen Bereich enthält, der einen entsprechenden ebenen Bereich (114,136) in der in Eingriff befindlichen Fläche der hergestellten Verbundwelle (18,116,134) formt.

5. Werkzeug nach Anspruch 1, dadurch gekennzeichnet, daß
i) die mit dem Verbundmaterial in Eingriff bringbare Fläche (30,90) jedes Paares aus innerem und äußerem Kegelring (24,88;26,96) wenigstens einen sich umfangsseitig erstreckenden ebenen Bereich enthält, der einen entsprechenden ebenen Bereich (114,136) in der in Eingriff befindlichen Fläche der hergestellten Verbundwelle (18,116,134) formt.

6. Werkzeug nach Anspruch 1, gekennzeichnet durch
drehbare Endanschlußmittel (22), die an jedem Dornende zum Halten der Krafterzeugungsmittel (28,94) und des an jedem Dornende angeordneten Teiles des inneren Kegelringes (24,88) angeordnet sind.

7. Werkzeug nach Anspruch 6, dadurch gekennzeichnet, daß
i) die drehbaren Endanschlußmittel (22) eine Spindel (38) enthalten, die wenigstens ein Anschlagmittel (48,50,52;102) zur Begrenzung der Bewegung der Krafterzeugungsmittel (28,94) relativ zur Längsachse aufweist.

8. Werkzeug nach Anspruch 6, dadurch gekennzeichnet,
i) daß die drehbaren Endanschlußmittel (22) eine Spindel (38) und einen kuppelförmigen Bereich (36) enthalten, wobei die Spindel (38) Anschlagmittel (48,50,52;102) zur Begrenzung der Bewegung der Krafterzeugungsmittel (28,94) relativ zur Längsachse aufweist; und
ii) daß der kuppelförmige Bereich (36) Anschlagmittel (54) zur Begrenzung der Bewegung des inneren Kegelringes (24,88) relativ zu der Längsachse enthält.

9. Werkzeug nach Anspruch 8, dadurch gekennzeichnet,

iii) daß der Dorn (12) eine Außenfläche enthält, auf welche Verbundmaterial abgegeben wird; und

iv) daß der kuppelförmige Bereich (36) eine gekrümmte Oberfläche, die els eine Fortsetzung der Außenfläche des Dorns (12) dient, enthält.

10. Werkzeug nach Anspruch 1, dadurch gekennzeichnet, daß

ii) die Krafterzeugungsmittel (28,94) wenigstens zwei diametral gegenüberliegende einstellbare Federanordnungen (70,92) aufweisen.

11. Verfahren zum Formen einer Welle (18,116,134) aus Verbundmaterial, die eine Längsachse festlegt und einen zylindrischen Bereich und wenigstens einen konisch erweiterten Endbereich besitzt, wobei an jedem eine innere und eine äußere Fläche festgelegt ist, welches Verfahren folgende Schritte enthält:

Abgeben von Verbundmaterial auf ein Werkzeug (10), das einen Dorn (12), einen mit wenigstens einem Ende des Dorns (12) verbundenen inneren Kegelring (24,88) und einen äußeren Kegelring (26,96), der an jedem Ende des Dorns (12) angeordnet ist, mit dem ein innerer Kegelring (24,88) verbunden ist, aufweist, zum Formen des zylindrischen Bereiches und des wenigstens einen konisch erweiterten Endbereiches der Verbundwelle; und

Anwenden einer Kraft durch Bewegen des äußeren Kegelringes (26,96) relativ zu seinem ihm zugeordneten inneren Kegelring (24,88) des Werkzeuges (10) in Richtung der Längsachse längs der inneren und äußeren Flächen des wenigstens einen konisch erweiterten Endbereiches zum maßhaltigen Formen/Verdichten des Verbundmaterials an dem wenigstens einen konisch erweiterten Endbereich, wodurch eine glatte innere und äußere Oberfläche an dem wenigstens einen konisch erweiterten Ende erzeugt wird.

12. Verfahren nach Anspruch 11, dadurch gekennzeichnet, daß

i) die Kraft auf den wenigstens einen konisch erweiterten Endbereich nach Beendigung des Schrittes der Abgabe von Verbundmaterial angewandt wird.

13. Verfahren nach Anspruch 11, dadurch gekennzeichnet, daß

i) die Kraft auf den wenigstens einen konisch erweiterten Endbereich in Zwischenstufen während des Schrittes der Abgabe von Verbundmaterial angewandt wird.

14. Verfahren zum Formen einer Welle (18,116,134) aus Verbundmaterial, die eine Längsachse festlegt und einen zylindrischen Bereich und wenigstens einen konisch erweiterten Endbereich besitzt, wobei an jedem Bereich eine innere und eine äußere Fläche festgelegt ist, welches Verfahren folgende Schritte enthält:

Abgeben von Verbundmaterial auf ein Werkzeug (10), das einen Dorn (12), einen mit wenigstens einem Ende des Dorns (12) verbundenen inneren Kegelring (24,88) und einen äußeren Kegelring (26,96), der an jedem Ende des Dorns (12) angeordnet ist, mit dem ein innerer Kegelring (24,88) verbunden ist, aufweist, zum Formen des zylindrischen Bereichs und des wenigstens einen konisch erweiterten Endbereichs der Verbundwelle; und

Anwenden einer Kraft längs der inneren und äußeren Flächen des wenigstens einen konisch erweiterten Endbereiches in Zwischenstufen während des Schrittes des Abgebens von Verbundmaterial zum maßhaltigen Formen/Verdichten des Verbundmaterials an dem wenigstens einen konisch erweiterten Ende, wodurch eine glatte innere und äußere Oberfläche an dem wenigstens einen konisch erweiterten Ende erzeugt wird.

**Revendications**

1. Outil (10) utilisé en combinaison avec un moyen (110) fournissant une matière composite pour confectionner un arbre composite (18,116, 134) ayant une partie cylindrique et au moins une extrémité arrondie, comprenant:

un mandrin (12) définissant un axe longitudinal et la partie cylindrique de l'arbre composite (18, 116,134);

un anneau tronconique intérieur (24,88) raccordé à au moins une extrémité du mandrin (12);

un anneau tronconique extérieur (26,96) situé à chacune des extrémités du mandrin (12) à laquelle un anneau tronconique intérieur (24,88) est raccordé, les deux anneaux tronconiques (24,88;26,96) définissant des surfaces (30,90) de contact avec la matière composite qui s'étendent en faisant sensiblement le même angle avec l'axe longitudinal; et

un moyen (28,94) générateur de force raccordé et associé fonctionnellement à chaque anneau tronconique extérieur (26,96) pour le déplacer par rapport à l'anneau tronconique intérieur (24,88) qui lui est associé et, de la sorte, pour conformer/ compacter la matière composite entre les surfaces (30,90) de contact avec la matière composite des deux années tronconiques (24,88;26,96).

2. Outil selon la revendication 1 dans lequel:

i) un anneau tronconique intérieur (24,88) et un anneau tronconique extérieur (26,96) sont situés à chaque extrémité du mandrin (12); et

ii) ce mandrin (12) définit un diamètre d'ajustage (20) à chaque extrémité pour recevoir une partie (32) de l'anneau tronconique intérieur (24,88) qui lui est associé, de sorte que les anneaux tronconiques intérieurs (24,88) sont disposés similairement par rapport audit axe longitudinal.

3. Outil selon la revendication 2 dans lequel, en outre:

iii) le mandrin (12) comprend une surface extérieure qui définit une conicité entre les diamètres d'ajustage (20).

4. Outil selon la revendication 1 dans lequel:

i) la surface (30,90) de contact avec la matière composite d'un anneau au moins de chaque paire d'anneaux tronconiques intérieur et extérieur (24,88;26,96) comprend au moins une partie plate s'étendant circonférentiellement qui forme une partie plate (114,136) correspondante sur la surface engagée de l'arbre composite (18,116,134) fabriqué.

5. Outil selon la revendication 1 dans lequel:

i) la surface (30,90) de contact avec la matière composite de chaque paire d'anneaux tronconiques intérieur et extérieur (24,88,26,96) comprend au moins une partie plate s'étendant circonférentiellement qui forme une partie plate (114,136) correspondante sur la surface engagée de l'arbre composite (18,116,134) fabriqué.

6. Outil selon la revendication 1 comprenant en outre:

un moyen (22) de déflexion d'extrémité situé à chaque extrémité du mandrin pour porter le moyen (28,94) générateur de force et une partie de l'anneau tronconique intérieur (24,90) situé à chaque extrémité du mandrin.

7. Outil selon la revendication 6 dans lequel:

i) le moyen (22) de déflexion d'extrémité comprend un arbre (38) qui constitue au moins un moyen d'arrêt (48,50,52;102) pour limiter le déplacement du moyen (28,94) générateur de force par rapport audit axe longitudinal.

8. Outil selon la revendication 6 dans lequel:

i) le moyen (22) de déflexion d'extrémité comprend un arbre (38) et une partie de dôme (36), cet arbre (38) comprenant un moyen d'arrêt (48,50,52;102) pour limiter le déplacement du moyen (28,94) générateur de force par rapport audit axe longitudinal; et

ii) la partie de dôme (36) comprend des moyens d'arrêt (54) de butée pour limiter le déplacement de l'anneau tronconique intérieur (24,88) par rapport audit axe longitudinal.

9. Outil selon la revendication 8 dans lequel:

iii) le mandrin (12) comprend une surface extérieure sur laquelle la matière composite est dispensée; et

iv) la partie de dôme (36) comprend une surface incurvée qui sert d'extension à la surface extérieure du mandrin (12).

10. Outil selon la revendication 1 dans lequel:

ii) le moyen (28,94) générateur de force comprend au moins deux ensembles de ressorts (70,92) réglables diamétralement opposés.

11. Procédé de fabrication d'un arbre composite (18,116,134) définissant un axe longitudinal et ayant une partie cylindrique et au moins une extrémité arrondie, définissant chacune une surface intérieure et une surface extérieure, comprenant les opérations de:

dispenser une matière composite à un outil (10) comprenant un mandrin (12), un anneau tronconique intérieur (24,88) raccordé à au moins une extrémité du mandrin (12) et un anneau tronconique extérieur (26,96) situé à chacune des extrémités du mandrin (12) à laquelle un anneau tronconique intérieur (24,88) est raccordé, pour former la partie cylindrique et au moins ladite extrémité arrondie de l'arbre composite; et

exercer une force, par le déplacement de l'anneau tronconique extérieur (26,96) par rapport à l'anneau tronconique intérieur (24,88) qui lui est associé de l'outil (10) dans la direction de l'axe longitudinal, sur les surfaces intérieure et extérieure de ladite extrémité arrondie au moins pour conformer/compacter la matière composite à ladite extrémité arrondie, au moins pour produire ainsi une surface intérieure et extérieure lisse à ladite extrémité arrondie.

12. Procédé selon la revendication 11 selon lequel:

i) la force est exercée sur ladite extrémité arrondie à la fin de l'opération de distribution de la matière composite.

13. Procédé selon la revendication 11 selon lequel:

i) la force ext exercée sur ladite extrémité arrondie à des stades intermédiaires, pendant l'opération de distribution de la matière composite.

14. Procédé de fabrication d'un arbre composite (18,116,134) définissant un axe longitudinal et ayant une partie cylindrique et au moins une extrémité arrondie, définissant chacune une surface intérieure et une surface extérieure, comprenant les opérations de:

dispenser une matière composite à un outil (10) comprenant un mandrin (12), un anneau tronconique intérieur (24,88) raccordé à au moins une extrémité du mandrin (12) et un anneau tronconique extérieur (26,96) situé à chacune des extrémités du mandrin (12) à laquelle un anneau tronconique intérieur (24,88) est raccordé, pour former la partie cylindrique et au moins ladite extrémité arrondie de l'arbre composite, et

exercer une force sur les surfaces intérieure et extérieure au moins de ladite extrémité arrondie, à des stades intermédiaires de l'opération de distribution de la matière composite, pour conformer/compacter la matière composite au moins à ladite extrémité arrondie, pour produire ainsi une surface intérieure et extérieure lisse au moins à ladite extrémité arrondie.

FIG.1

FIG.2

FIG.5

**FIG.3**

# FIG.4

# FIG.6

# FIG.7